(19) Europäisches Patentamt
European Patent Office
Office européen des brevets

(11) **EP 3 367 260 A1**

(12) **EUROPEAN PATENT APPLICATION**

(43) Date of publication:
**29.08.2018 Bulletin 2018/35**

(51) Int Cl.:
***G06F 17/30*** *(2006.01)*

(21) Application number: **17157883.4**

(22) Date of filing: **24.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• **DROOGHAAG, Benoît 6041 Gosselies (BE)**
• **VAN DAMME, Axel 6041 Gosselies (BE)**

(74) Representative: **Nokia Bell Patent Attorneys Copernicuslaan 50 2018 Antwerp (BE)**

Remarks:
Amended claims in accordance with Rule 137(2) EPC.

(54) **METHOD AND DEVICE FOR DATA ANALYSIS**

(57) Embodiments relate to a method for data analysis, executed by a data analysis device (2), comprising:
- sending (S3) a request (RQ) to a data management platform (4) storing a dataset (5) including a plurality of records, a record specifying at least a value of a first variable,
- in response to said request (RQ), receiving (S4) a dataset summary (S) representative of a frequency distribution of said first variable or of a cumulative distribution function of said first variable,
- determining (S5, S8) a plurality of histograms in function of the dataset summary (S) and of respective bins and ranges.

FIG. 2

**Description**

FIELD OF THE INVENTION

The present invention relates to the field of data analysis. In particular, the present invention relates to a method and a device for histogram computation for large and distributed dataset.

BACKGROUND

A data management platform designed to store and manage a very large amount of data may be referred to as a "Big Data" platform. Such data management platforms typically have a clustered high-level architecture, which is based on the fact that moving around big set of data is resource costly. This drives the solution of having data manipulation done as close as the data location as possible. Accordingly, a data management platform comprises a master and a plurality of data nodes. The master accepts queries, for example in a SQL-like format. For robustness against data loss or server crash, data is sliced into blocks that are replicated on several of the data nodes. Respective data nodes include workers co-located close to their data and provided with jobs by the master. After the workers have completed their jobs, the results are sent back to the master and if more jobs are required to be executed, the master will request the workers to start new jobs. The master on his side is responsible of providing all workers with jobs and aggregate the jobs results to provide the end-user with the result of the initial query.

Data scientist's day-to-day work is to extract knowledge from data. Data scientists use their analytical ability to find and interpret rich data sources. This is done by exploring the data. To conduct this exploration, data scientists are usually performing many consecutive queries. During this explanatory phase, time is crucial. If a query takes a minute or more to get its result, the process of exploration would be a burden and the data scientist will lose the momentum and the excitation of ideas he could verify straight away.

However, depending of the size of the dataset and the cluster size, for a typical data exploration query such as obtaining a histogram for given bin size an range, query execution can last for several dozens of seconds even using the latest analytics technology. Moreover, after the result of a query is presented as a graphic visualization, the end-user may need to fine-tune this query to explore the dataset differently. A new request is performed resulting in another query to the database and the same amount of time is spent to get the result.

SUMMARY

It is thus an object of embodiments of the present invention to propose methods and devices for data analysis, which do not show the inherent shortcomings of the prior art.

Accordingly, embodiments relate to a method for data analysis, executed by a data analysis device, comprising:

- sending a request to a data management platform storing a dataset including a plurality of records, a record specifying at least a value of a first variable,
- in response to said request, receiving a dataset summary representative of a frequency distribution of said first variable or of a cumulative distribution function of said first variable,
- determining (S5, S8) a plurality of histograms in function of the dataset summary (S) and of respective bins and ranges.

Correlatively, embodiments relates to a data analysis device comprising means configured for:

- sending a request to a data management platform storing a dataset including a plurality of records, a record specifying at least a value of a first variable,
- in response to said request, receiving a dataset summary representative of a frequency distribution of said first variable or of a cumulative distribution function of said first variable,
- determining a plurality of histograms in function of the dataset summary and of respective bins and ranges.

In some embodiments, the variable is a discrete variable, the request being a request for counting the number of times respective values of the variable are present in the dataset.

In that case, the data summary may specify pairs including a value of the variable and a count, and determining a histogram may comprise calculating, for respective bins, a sum of the counts associated with the values within said bin.

In some embodiments, the variable is a continuous variable, the request being a request for a cumulative distribution function of the variable estimated by a t-digest.

In some embodiments, said data summary specifies pairs including a centroid mean and a centroid count, and wherein determining a histogram comprises calculating, for respective bins, a difference between a sum of the centroid counts associated with the centroid means within said bin and a total count of a previous bin.

The method may comprise obtaining the respective bin sizes and ranges in function of user inputs.

The method may comprise:

- obtaining first bins and a first range in function of user inputs,
- displaying a first histogram determined in function of said first bins and first range,
- after displaying said first histogram, obtaining second bins and a second range in function of user inputs,
- displaying a second histogram determined in function of said second bins and second range.

The method may comprise changing a display of a histogram in function of user inputs.

The variable may specify one or more operating parameters of a telecommunication network.

Embodiments also relate to a computer program comprising instructions for performing the method mentioned before when said instructions are executed by a computer. The computer program may be stored on a non-transitory computer readable medium.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram of a system for data analysis,
Figure 2 is a communication diagram illustrating a method for data analysis in the system of Figure 1, and
Figure 3 is structural view of the data analysis device of the system of Figure 1.

DESCRIPTION OF EMBODIMENTS

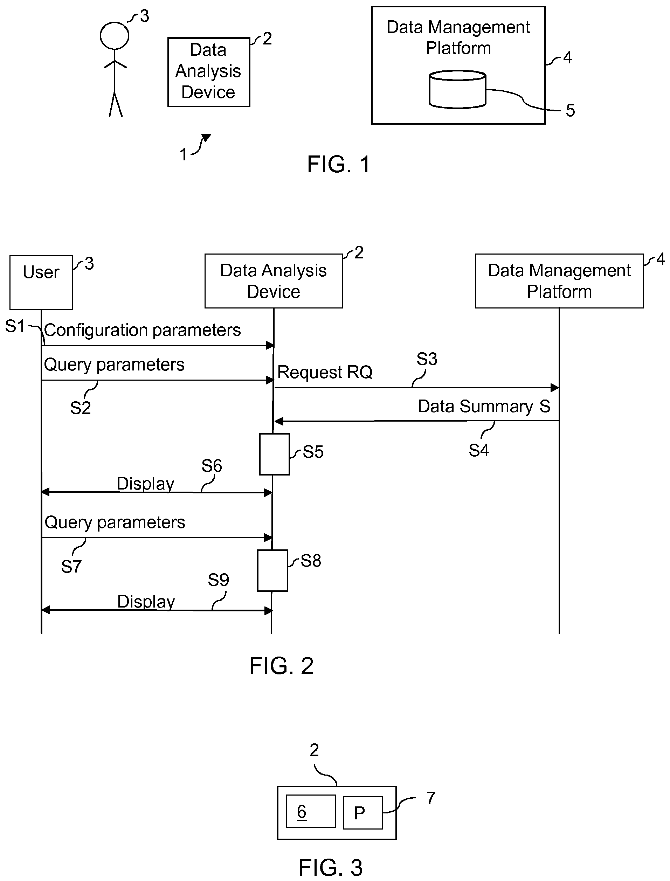

**Figure 1** is a block diagram of a system 1 for data analysis. The system 1 comprises a data analysis device 2 operated by a user 3 and a data management platform 4.

The data analysis device 2 is a computing device such as a personal computer (desktop, laptop...), a tablet, a smartphone... The data analysis device 2 comprises a user interface for allowing the user 3 to input data analysis instructions and for outputting (for example displaying) data analysis results to the user 3. The data analysis device 2 is configured for communication with the data management platform 4, for example through a network (not shown). Communication with the data management platform 4 comprises sending requests to the data management platform 4 and receiving responses from the data management platform 4.

The data management platform 4 may be referred to as a "Big Data" platform. The data management platform 4 is configured for storing at least one dataset 5 and for responding to requests on the dataset 5. The data management platform 4 comprises for example a plurality of data servers, and the dataset 5 is stored in a distributed manner on the data servers. This allows storing a dataset 5 of very large size with scalability.

In a typical implementation, the data management platform 4 has a clustered high-level architecture. For example, the data management platform 4 comprises a master and a plurality of data nodes. The master is configured for accepting queries, for example in a SQL-like format. Respective data nodes include workers co-located close to their data and provided with jobs by the master. After the workers have completed their jobs, the results are sent back to the master and if more jobs are required to be executed, the master will request the workers to start new jobs. The master on his side is responsible of providing all workers with jobs and aggregate the jobs results to provide the end-user with the result of the initial query.

The data management platform 4 may be configured for using technologies such as MapReduce, Hive, Impala, and Spark. Accordingly, the data management platform 4 is capable of processing SQL-like requests received from the data analysis device 2.

The dataset 5 includes a plurality of records. A record specifies the value of at least one variable. The dataset 5 may be organized as a table, wherein for example records correspond to respective lines and variables correspond to respective columns. Typically, the size of the dataset 5 is much larger than the size of the working memory of the data analysis device 2. A variable may be discrete or continuous. In some example, a discrete variable may be coded on 16 bits and a continuous variable may be coded on 32 bits.

In an example use case, the dataset 5 specifies operating parameters of a telecommunication network (or a part of a telecommunication network). For example, a record specifies the value of respective operating parameters (data rates, SNR, configuration parameters...) of a network access device connected to a plurality of CPEs (Customer Premises Equipment) through respective telecommunication lines. Respective records correspond to successive times.

**Figure 2** is a communication diagram illustrating a method for data analysis in the system of Figure 1.

The user 3 uses the data analysis device 2 to perform a data exploration process in order to extract knowledge from the dataset 5. This comprises inputting successive instructions for performing queries in function of the dataset 5, wherein the parameters for a query are chosen in function of the results of one or more previous queries.

For example, the user 3 selects a variable x in a table table, and the parameters for one query specify the bin size and range for generating a histogram of the variable x. The data analysis device 2 displays the histogram in a graphical user interface. The user 3 may analyze the displayed histogram. In function of the displayed histogram, the user 3 selects a bin size and range for the next query, for example for zooming in or out on the data.

Accordingly, the data analysis device 2 obtains configuration parameters input by the user 3 (Step S1). The configuration parameters specify the part of the dataset 5 on which the data exploration process should be performed. For example, the configuration parameters specify a table table and a variable x.

In addition, the data analysis device 2 obtains query parameters input by the user 3 (Step S2). The query parameters specify a range and a bin size or a set of bins. The range may be specified for example by min and max values.

Then, for example in response to step S2, the data analysis device 2 sends a request RQ to the data management platform 4 (Step S3). The request RQ is a query for a summary of the content of the dataset 5 for the table table and the variable x. The data management platform 4 process the request RQ and sends a data summary S to the data analysis device 2. Accordingly, the data analysis device 2 receives the data summary S (Step S4). The data analysis device 2 may stores the data summary S locally, for example in a working memory (RAM, hard disc...). The formats of the request RQ and of the summary S depend on the type of the variable x and are discussed in more details hereafter. However, it can already be noted that the request RQ may be a generic request which does not depend on the query parameters of step S2.

Then, the data analysis device 2 determines a histogram in function of the query parameters of step S2 and of the data summary S (step S5). Determination of the histogram depends on the format of the variable x and is discussed in more details hereafter. The histogram may be a normal histogram or a cumulative histogram.

The data analysis device 2 outputs (for example displays) the determined histogram (step S6). The bi-directional arrow shows that the user 3 may manipulate the displayed histogram (for example changing rendering parameters).

Then, the data analysis device 2 obtains new query parameters input by the user 3 (Step S7). The new query parameters specify a new bin size or set of bins and/or a new range. The data analysis device 2 determines a histogram in function of the new query parameters of step S7 and of the data summary S (step S8), and outputs the determined histogram (Step S9). Steps S7 to S9 may be repeated for generating successive histograms.

In the system 1, the user 3 inputs parameters for successive queries to the data analysis device 2. For processing the first query, the data analysis device 2 requests and obtains a data summary S from the data management platform 4. The size of the data summary S is significantly smaller than the size of the dataset 5. Accordingly, the data analysis device 2 may have a smaller working memory than the size of the dataset 5. Typically, the size of the working memory of the data analysis device 2 is several order of magnitude smaller that the size of the dataset 5.

Moreover, after the first query, the data analysis device 2 determines successive histograms locally, without the need to interact with the data management platform 4. Determining a histogram locally may be significantly faster than determining a histogram by interacting with the data management platform 4. For example, the former may take less than one second while the later may take tens of seconds.

In addition, the formats of the data summary S discussed hereafter allows determining accurate histograms. Accordingly, the data exploration process does not need to comprise additional interactions with the data management platform 4. This contributes to reduce significantly the time of the data exploration process.

The variable x may be a discrete variable, and the request RQ may be a request for a frequency distribution of the variable x in the dataset 5. In other word, the query RQ is aimed at counting the number of time every possible discrete value of the variable x is present in the dataset 5.

An example format for the query RQ to retrieve the data summary S allowing any histogram rendering of a discrete variable x contained in a table table is the following:

    SELECT x, COUNT(*)FROM table GROUP BY x

This query RQ is much faster than a query for a histogram since it only involves counts and no more aggregations. It would return a maximum of $2^{16}$ (65536) values in case of the distribution of a variable coded over 16 bits. This aggregated set is then easily consumable by the data analysis device 2.

Once the data summary S is available to the data analysis device 2, the user 3 would be free to inspect the data to his/her own need in real time. The bin sizes and the range to be visualized can be set online and result would be shown in very short time (e.g. milliseconds) since all required data are local to the data analysis device 2.

Assuming the data summary S holds pairs of values (x) and counts (c):

$$S = \{(x_1;c_1),\ldots(x_N;c_N)\}$$

Assuming that the bin size distribution is defined by:

$$B = \{(a_1,b_1),\ldots(a_N,b_N)\}$$

Note: usually bins are continuous (ie $a_i = b_{i-1}$) but here it is not a constraint.

To construct an histogram H = $\{(bi_1,bc_1),\ldots(bi_N,bc_N)\}$ with bin (bi) and count (bc) ranging from $x_{min}$ to $x_{max}$, a single loop through all elements ($\approx$65536) of the data summary S will produce the requested histogram like described here:

$$\text{for } (x_n;c_n) \in X \text{ where } x_n > x_{min} \,\&\, x_n < x_{max}$$
$$\text{for } (a_i;b_i) \in B:$$
$$\text{if } x_n > a_i \,\&\, x_n < b_i :$$
$$bc_i \leftarrow bc_i + c_n$$

This allows constructing histogram with non-constant bin sizes (for example if the variable distribution has a logarithmic profile).

With this approach, all the data visualization part is local to the data analysis device 2. If the user 3 needs to adapt some visualization parameters, no new query is performed on the data management platform 4. This has the huge benefit of freeing resources of the data management platform so more processing power is available for other purposes. This reduces the cost per entries in the database.

The variable x may be a continuous variable, and the request RQ may be a request for a cumulative distribution function of the variable x in the dataset 5. In that case, data summary S may specify the cumulative distribution function of the variable x estimated by a t-digest.

The t-digest is a known data estimation structure that can be used for histogram construction. The idea behind t-digest is to create a data estimation that represents the "interesting" points of the dataset using "centroids". A centroid is representing a mean and a count. Existing API's allow requesting a t-digest from a data management platform. For example, with the computing framework Apache Spark the t-digest computation of a variable x of a dataframe d can be requested by:

```
from tdigest import TDigest
digest = TDigest()
digest.batch_update(sqlContext.sql("SELECT x from table").
```

To understand better the benefit of the t-digest and how it compress data in an "intelligent" way, we will check how t-digest behave on the Cumulative Distribution Function of a variable.

A Cumulative Distribution Function (CDF) of a distribution function of real-valued variable X, evaluated at x, is the probability that X will take a value less than or equal to x. With such CDF it is then possible to calculate several statistics about the variable X. Statistics like min, max, mean, average, quantile distribution but also histograms.

The t-digest algorithm has been designed to efficiently compress CDF, because it keeps more accuracy for area of the function where it varies steeply and it will aggregate more data points where CDF is not varying much.

The t-digest construction algorithm allow identifying where "interesting and relevant" points are, and keeps only the parts of the CDF where the CDF is changing fastest. These are where quantities like the percentile are changing quickest. Flat portions of the CDF only need to be summarized by a few points.

Another advantage of t-digest is that is has well-defined and easily proven error bounds. The number of aggregated points the t-digest can contain for a specific centroid is bounded by some parameter $\delta$ controlling the accuracy. If $\delta$ is small, less points can be aggregated to the centroids and will have to be added to other centroids.

Another advantage of the t-digest algorithm is that it was designed to be run in parallel over parts of the main dataset. The aggregation of the different outputs of the parallel runs can be merge together using the t-digest algorithm itself.

As mentioned already, once a t-digest CDF is available all sort of rank statistics can be derived, including any histogram.

The data summary S holds pairs including a centroid mean ($x_n$) and a centroid count ($c_n$):

$$S = \{(x_1;c_1),\ldots(x_N;c_N)\}$$

As the CDF is a cumulative distribution, to extract number of occurrences a specific bin holds in a histogram, the CDF must be sampled with the desired bin size and for each sample, the delta with the previous sample must be computed.

Let us assume that the CDF of the variable x is defined as F(x).

To construct a histogram H = $\{(bi_1,bc_1),\ldots(bi_N,bc_N)\}$ with bin (bi) and count (bc) ranging from $x_{min}$ to $x_{max}$, with the bin size distribution defined as:

$$B = \{(a_1,b_1),\ldots(a_N,b_N)\}$$

The histogram may be determined like this:

$$
\begin{aligned}
&\text{for } x_n \in x_{min} \ldots x_{max}\\
&\quad \text{for } (ai,bi) \in B\\
&\quad\quad \text{if } x_n > a_i \ \& \ x_n < b_i :\\
&\quad\quad\quad \text{if } i = 0:\\
&\quad\quad\quad\quad bc_i \leftarrow bc_i + F(x_n)\\
&\quad\quad\quad \text{else:}\\
&\quad\quad\quad\quad bc_i \leftarrow bc_i + F(x_n) - bc_{i-1}
\end{aligned}
$$

The conversion from CDF to histogram can simply be seen as the histogram being the derivative of the CDF.

**Figure 3** is a structural view of the data analysis device 2, which comprises a processor 6 and a memory 7. The memory 7 stores a computer program P which, when executed by the processor 6, causes the data analysis device 4 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

**Claims**

1.  Method for data analysis, executed by a data analysis device (2), comprising:

- sending (S3) a request (RQ) to a data management platform (4) storing a dataset (5) including a plurality of records, a record specifying at least a value of a first variable,
- in response to said request (RQ), receiving (S4) a dataset summary (S) representative of a frequency distribution of said first variable or of a cumulative distribution function of said first variable,
- determining (S5, S8) a plurality of histograms in function of the dataset summary (S) and of respective bins and ranges.

2. Method according to claim 1, wherein said variable is a discrete variable, said request being a request for counting the number of times respective values of the variable are present in the dataset.

3. Method according to claim 2, wherein the data summary specifies pairs including a value of the variable and a count, and wherein determining a histogram comprises calculating, for respective bins, a sum of the counts associated with the values within said bin.

4. Method according to claim 1, wherein said variable is a continuous variable, said request being a request for a cumulative distribution function of the variable estimated by a t-digest.

5. Method according to claim 4, wherein said data summary specifies pairs including a centroid mean and a centroid count, and wherein determining a histogram comprises calculating, for respective bins, a difference between a sum of the centroid counts associated with the centroid means within said bin and a total count of a previous bin.

6. Method according to one of claims 1 to 5, comprising obtaining (S2, S7) said respective bin sizes and ranges in function of user inputs.

7. Method according to claim 6, comprising:

- obtaining first bins and a first range in function of user inputs,
- displaying a first histogram determined in function of said first bins and first range,
- after displaying said first histogram, obtaining second bins and a second range in function of user inputs,
- displaying a second histogram determined in function of said second bins and second range.

8. Method according to one of claims 1 to 7, comprising changing a display of a histogram in function of user inputs.

9. Method according to one of claims 1 to 8, wherein said variable specifies one or more operating parameters of a telecommunication network.

10. Computer program (P) comprising instructions for performing the method of one of claims 1 to 9 when said instructions are executed by a computer.

11. Data analysis device (2) comprising means (6, 7, P) configured for:

- sending a request to a data management platform storing a dataset including a plurality of records, a record specifying at least a value of a first variable,
- in response to said request, receiving a dataset summary representative of a frequency distribution of said first variable or of a cumulative distribution function of said first variable,
- determining a plurality of histograms in function of the dataset summary and of respective bins and ranges.

**Amended claims in accordance with Rule 137(2) EPC.**

1. Method for data analysis, executed by a data analysis device (2), comprising:

- sending (S3) a request (RQ) to a data management platform (4) storing a dataset (5) including a plurality of records, a record specifying at least a value of a first variable,
- in response to said request (RQ), receiving (S4) a dataset summary (S) representative of a frequency distribution of said first variable or of a cumulative distribution function of said first variable,

**characterized by**:

- determining (S5, S8) a plurality of histograms as a function of the dataset summary (S) and of respective bins and ranges, wherein determining a plurality of histograms comprises:
- obtaining (S2) first bins and a first range according to user inputs, then
- determining (S5) a first histogram as a function of said first bins and first range and displaying (S6) said first histogram,
- after displaying said first histogram, obtaining (S7) second bins and a second range according to user inputs, then
- determining (S8) a second histogram as a function of said second bins and second range and displaying (S9) said second histogram.

2. Method according to claim 1, wherein said variable is a discrete variable, said request being a request for counting the number of times respective values of the variable are present in the dataset.

3. Method according to claim 2, wherein the data summary specifies pairs including a value of the variable and a count, and wherein determining a histogram comprises calculating, for respective bins, a sum of the counts associated with the values within said bin.

4. Method according to claim 1, wherein said variable is a continuous variable, said request being a request for a cumulative distribution function of the variable estimated by a t-digest.

5. Method according to claim 4, wherein said data summary specifies pairs including a centroid mean and a centroid count, and wherein determining a histogram comprises calculating, for respective bins, a difference between a sum of the centroid counts associated with the centroid means within said bin and a total count of a previous bin.

6. Method according to one of claims 1 to 5, comprising changing a display of a histogram according to user inputs.

7. Method according to one of claims 1 to 6, wherein said variable specifies one or more operating parameters of a telecommunication network.

8. Computer program (P) comprising instructions for performing the method of one of claims 1 to 7 when said instructions are executed by a computer.

9. Data analysis device (2) comprising means (6, 7, P) configured for:

   - sending a request to a data management platform storing a dataset including a plurality of records, a record specifying at least a value of a first variable,
   - in response to said request, receiving a dataset summary representative of a frequency distribution of said first variable or of a cumulative distribution function of said first variable,

   **characterized in that** said means are configured for:

   - determining a plurality of histograms as a function of the dataset summary and of respective bins and ranges, wherein determining a plurality of histograms comprises:
   - obtaining (S2) first bins and a first range according to user inputs, then
   - determining (S5) a first histogram as a function of said first bins and first range and displaying (S6) said first histogram,
   - after displaying said first histogram, obtaining (S7) second bins and a second range according to user inputs, then
   - determining (S8) a second histogram as a function of said second bins and second range and displaying (S9) said second histogram.

FIG. 1

FIG. 2

FIG. 3

Europäisches
Patentamt

European
Patent Office

Office européen
des brevets

# EUROPEAN SEARCH REPORT

Application Number

EP 17 15 7883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Srinath Perera ET AL: "Analytics" In: "Hadoop MapReduce Cookbook", 25 January 2013 (2013-01-25), Packt Publishing, Birmingham, UK, XP055372402, ISBN: 978-1-84951-728-7 pages 135-164, | 1-3,6-11 | INV. G06F17/30 |
| Y | * page 135, paragraph 1 * <br> * page 147, last paragraph * <br> * How to do it; <br> page 148, paragraph 1 * <br> * item 7; <br> page 149 * <br> * item 9; <br> page 149 * <br> * items 11, 12; <br> page 149 * <br> * page 149; figure bottom * <br> * page 150, paragraph 4 - paragraph 5 * <br> ----- | 4,5 | |
| Y | Ted Dunning ET AL: "Computing Extremely Accurate Quantiles Using t-Digests", GitHub, 12 December 2016 (2016-12-12), pages 1-23, XP055372373, Retrieved from the Internet: URL:https://github.com/tdunning/t-digest/blob/b64516ff7c2f2ec4f0eed4d2a2f4a022b0487246/docs/t-digest-paper/histo.pdf [retrieved on 2017-05-12] * page 13, paragraph second last * * page 14, paragraph 2 * * "Computing t-digests in parallel"; page 19, paragraph 1 - paragraph 2 * ----- | 4,5 | TECHNICAL FIELDS SEARCHED (IPC) <br><br> G06F |

-/--

The present search report has been drawn up for all claims

| Place of search | Date of completion of the search | Examiner |
|---|---|---|
| The Hague | 16 May 2017 | Rameseder, Jonathan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 17 15 7883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | Ted Dunning ET AL: "Progress commit on article. Good up to description of merging variant . tdunning/t-digest@b64516f", GitHub, 12 December 2016 (2016-12-12), pages 1-3, XP055372369, Retrieved from the Internet: URL:https://github.com/tdunning/t-digest/commit/b64516ff7c2f2ec4f0eed4d2a2f4a022b0487246 [retrieved on 2017-05-12] * page 1 * | 4,5 | |

-----

TECHNICAL FIELDS
SEARCHED      (IPC)

The present search report has been drawn up for all claims

| Place of search | Date of completion of the search | Examiner |
|---|---|---|
| The Hague | 16 May 2017 | Rameseder, Jonathan |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
...........................................................................................
& : member of the same patent family, corresponding
      document

EPO FORM 1503 03.82 (P04C01)

page 2 of 2